# EUROPÄISCHE PATENTSCHRIFT

(11) **EP 0 836 664 B1**
(45) Veröffentlichungstag und Bekanntmachung des Hinweises auf die Patenterteilung: **07.01.1999**
(21) Anmeldenummer: 96920624.2
(22) Anmeldetag: 02.07.1996
(51) Int. Cl.: E04G 21/22

(54) **ROBOTER ZUM ZIEGELSETZEN FÜR EIN AUFGEHENDES MAUERWERK**
BRICK-LAYING ROBOT FOR RISING MASONRY
ROBOT POUR POSER DES BRIQUES DANS UN OUVRAGE DE MACONNERIE EN ELEVATION

(30) Priorität: 03.07.1995 AT 1130/95
(43) Veröffentlichungstag der Anmeldung: 22.04.1998
(73) Patentinhaber: Opferkuch Bau GmbH, 8083 St. Stefan im Rosental (AT); Paier, Rupert, 8082 Kirchbach (AT)
(72) Erfinder: MARKEL, Andreas, A-8741 Weisskirchen (AT)
(74) Vertreter: Gibler, Ferdinand, Dipl.Ing. Dr. techn.
(86) Internationale Anmeldenummer: AT9600116
(87) Internationale Veröffentlichungsnummer: WO9702397

(56) Entgegenhaltungen:
- EP-A- 0 630 854
- DE-A- 2 113 644
- DE-A- 2 406 588
- DE-A- 3 604 224
- DE-A- 3 722 244
- DE-A- 4 207 384
- DE-A- 4 319 714
- FR-A- 2 553 368
- FR-A- 2 553 731
- US-A- 3 921 739

## Beschreibung

Die Erfindung bezieht sich auf einen Roboter zum Ziegelsetzen für ein aufgehendes Mauerwerk mit einem Greifarm, wobei eine den Greifarm tragende zentrale Stützvorrichtung vorgesehen ist, auf welcher der gesamte Roboter statisch abstützbar ist.

Bisher erfolgte das Errichten eines Mauerwerkes händisch, die einzelnen Ziegel wurden mit Mörtel miteinander verbunden. Eine ausgebildete Fachkraft setzte die Ziegel, wobei diese Fachkraft zufolge geometrischer Unterschiede zwischen den einzelnen Ziegel und der meist nicht absolut ebenen Mörtelschichten zwischen den Ziegelscharen die horizontale Planizität jeder Ziegelschar vor dem Setzen der nächsten Ziegelschar sicherstellen mußte. Um die Unebenheiten, die durch die einzelnen Mörtelschichten entstehen, zu vermeiden, werden die Ziegel miteinander verklebt. Dieses Verfahren findet auch bei dieser Erfindung Anwendung.

Weiters wurden für die "Ziegelzufuhr" und das Vorbereiten des zur Verbindung der Ziegel eingesetzten Mörtels noch weitere Personen benötigt.

Aus diesen Umständen ergeben sich folgende zwei Nachteile: Das Aufbauen einer Mauer nach dieser bekannten Art nimmt eine Menge Zeit in Anspruch und die zum Aufbau des Mauerwerks eingesetzten Personen verursachen dem Auftraggeber Kosten.

Durch die **DE-A-36 04 224** wurde ein Roboter bekannt, mit dessen Hilfe großformatige Mauersteine zu einem aufgehenden Mauerwerk zusammengesetzt werden können. Dieser Roboter besteht aus einem Kleinfahrzeug, umfassend einen Fahrzeugrahmen, an dessen Unterseite eine antreibbare Achse sowie eine Lenkachse festgelegt ist und an dessen Oberseite ein vertikal zum Fahrzeugrahmen verlaufendes säulenartiges Hubgerüst drehbar festgelegt ist. Dieses Hubgerüst trägt einen parallel zum Fahrzeugrahmen verlaufenden Träger, an dessen Ende ein Greifarm zur Handhabung der Mauersteine festgelegt ist. Besagter Träger ist entlang des Hubgerüstes verschiebbar gelagert sowie in seiner Länge dadurch verstellbar gestaltet, daß der eine Trägerteil verschiebbar im zweiten Trägerteil gelagert ist.

Daneben wurde durch die **FR-A-2 553 368** eine Einrichtung zum Transport von Lasten bekannt, welche sich durch eine Art Gehen fortgewegt.

Diese Einrichtung umfaßt eine Grundplatte, welche eine zentrale Durchbrechung aufweist. In dieser Durchbrechung ist ein Schlitten angeordnet, der entlang zweier an der Grundplatte festgelegten Gleitführungen verschiebbar gelagert ist. Desweiteren sind Hydraulikzylinder vorgesehen, deren erste Enden an der Grundplatte und deren zweite Enden am Schlitten festgelegt sind.

Sowohl die Grundplatte als auch der Schlitten weisen an ihren Unterseiten Füße auf, die mittels Hydaulikzylinder höhenverstellbar gehalten sind. An der Oberseite weist der Schlitten ein auf Kugeln gelagertes Drehteller zur Aufnahme der zu transportierenden Last auf.

Die Weiterbewegung dieser Vorrichtung wird dadurch erreicht, daß die gesamte Vorrichtung durch Ausfahren der Schlitten-Füße und Einziehen der Grundplatte-Füße auf den Schlitten abgestützt wird, in dieser Position mithilfe der Hydraulikzylinder die Grundplatte relativ zum Schlitten in Weiterbewegungsrichtung verschoben und anschließend die gesamte Vorrichtung durch Einziehen der Schlitten-Füße und Ausfahren der Grundplatten-Füße auf der Grundplatte abgestützt wird. Schließlich wird der Schlitten über die Hydraulikzylinder in Weiterbewegungsrichtung verschoben.

Aufgabe der vorliegenden Erfindung ist es daher, einen Roboter der eingangs erwähnten Art anzugeben, mit dem es möglich ist, auch weitläufige Mauerwerke automatisch zu setzen.

Erfindungsgemäß wird dies dadurch erreicht, daß eine periphere Stützvorrichtung mit zwischen einer eingefahrenen und einer ausgefahrenen Position höhenverstellbaren Stützfüßen vorgesehen ist, in welcher eingefahrenen Position der gesamte Roboter mit der zentralen Stützvorrichtung auf dem Untergrund statisch abgestützt ist und in welcher ausgefahrenen Position der gesamte Roboter mit den Stützfüßen auf dem Untergrund statisch abgestützt ist, daß die zentrale Stützvorrichtung durch einen ausschließlich zueinander unbewegliche Teile umfassenden unbeweglich am Greifarm festgelegten Bauteil gebildet ist und daß die periphere Stützvorrichtung in Richtung parallel zur zu setzenden Ziegelschar gegenüber der zentralen Stützvorrichtung um eine vorbestimmbare Schrittweite verschiebbar ist.

Dadurch kann sich der Roboter auf einfache Weise "Gehbewegungen" ausführen, sich also selbständig weiterbewegen und somit beliebig lange Mauerwerke mit beliebigem Verlauf aufbauen.

In diesem Zusammenhang kann vorgesehen sein, daß die zentrale Stützvorrichtung aus einem Hohlzylinder gebildet ist, der fest mit einer Bodenplatte verbunden und mit seitlichen Stützflügel versehen ist.

Mit dieser Bauform wird eine sehr gute Standfestigkeit des Roboters erreicht.

Weiters kann vorgesehen sein, daß die Stützfüße der peripheren Stützvorrichtung auf einer horizontalen Grundplatte angeordnet sind, und daß die zentrale Stützvorrichtung durch ein Schwenklager und durch die horizontale Grundplatte hindurchverlaufend angeordnet ist, wobei das Schwenklager einerseits mit der zentralen Stützvorrichtung und andererseits mit einer horizontalen Verfahrplattform verbunden ist, welche Verfahrplattform gegenüber der horizontalen Grundplatte verschiebbar ist.

Dies erlaubt einen einfachen und zweckmäßigen Aufbau der peripheren Stützvorrichtung sowie eine gute Beweglichkeit der zentralen Stützvorrichtung und somit des Greifarmes in Hinsicht auf Verschwenk-Bewegungen.

Bei einer bevorzugten Ausführungsform der Erfindung kann vorgesehen sein, daß das Schwenklager durch ein Kugellager gebildet ist, dessen Innenwalze an der einen Seite fest mit der zentralen Stützvorrichtung verbunden ist und dessen Außenwalze an der anderen Seite fest mit der horizontalen Verfahrplattform verbunden ist.

Die Verwendung eines Kugellagers bringt eine leichte Verschwenkbarkeit und somit die Möglichkeit eines energiesparenden Antriebs für diese Verschwenkbarkeit mit sich.

Eine weitere Art der Ausführung der Erfindung kann sein, daß die Innenwalze des Kugellagers mit der zentralen Stützvorrichtung über eine erste Platte und gegebenenfalls über eine zweite Platte verbunden ist.

Dieses Detail ermöglicht eine gute Übertragung der Gewichtskraft, die von der vertikalen Säule und dem Schwenkarm ausgeübt wird, auf die Stützfüße.

Weiters kann vorgesehen sein, daß an der Außenwalze des Kugellagers eine Verzahnung angebracht ist, die mit einem Ritzel eines an der Platte angeordneten dritten Getriebemotors in Eingriff steht.

Diese Anordnung erlaubt einen spielfreien Antrieb der Verschwenkung.

Eine weite Art der Ausführung dieser Erfindung kann darin bestehen, daß die Verfahrplattform entlang zweier Führungen durch zwei vorzugsweise aus Kolben und Zylinder gebildeten Verfahrantriebe gegenüber der Grundplatte verschiebbar ist, welche mit ihren einen Enden mit der Grundplatte und mit ihren anderen Enden mit der horizontalen Verfahrplattform fest verbunden sind.

Unter Verwendung dieser Elemente kann die horizontale Verschiebung der Verfahrplattform sehr genau, spielfrei und trotzdem kraftvoll erfolgen.

Eine weitere Ausführungsform der Erfindung kann auch vorsehen, daß die Grundplatte quadratisch mit je einem Stützfuß an ihren Eckpunkten und mit einem vorzugsweise kreisförmigen Durchbruch in ihrer Mitte gebildet ist, durch welchen Durchbruch die zentrale Stützvorrichtung durchgeführt ist.

Daraus ergibt sich eine leichte und schnelle Fertigbarkeit des beschriebenen Teils, welcher Umstand zur Geringhaltung der Herstellungskosten des Roboters beiträgt. Weiters ist durch die Verwendung von vier Stützfüßen eine Ausreichende Standfestigkeit des Roboters gewährleistet.

Eine bevorzugte Ausführungsform der Erfindung kann darin bestehen, daß der Greifarm durch einen horizontalen Schwenkarm gebildet ist, welcher mit einem entlang der Schwenkarmachse verschiebbaren Greifer zum Aufnehmen und Absetzen eines Ziegels auf einer vertikalen Säule höhenverstellbar angeordnet ist, und daß die vertikale Säule an ihrem unteren Ende in dem auf der horizontalen Verfahrplattform angeordneten Schwenklager um ihre Längsachse verschwenkbar ist bzw. das Schwenklager mit der horizontalen Verfahrplattform um die Säule verschwenkbar ist.

Durch eine derartige Ausbildung des Greifarmes wird eine gute Beweglichkeit des Roboters erreicht.

In diesem Zusammenhang kann vorgesehen sein, daß der Greifer mit einem Ende des horizontalen Schwenkarms verbunden ist und daß der horizontale Schwenkarm entlang einer Führungsschiene horizontal gegenüber der vertikalen Säule verschiebbar ist.

Dadurch wird eine nahezu spielfreie und sehr exakte Verschiebbarkeit des Greifers erreicht.

Eine weitere Art der Ausführung der Erfindung kann darin bestehen, daß am horizontalen Schwenkarm eine sich über dessen Längsachse erstreckende Zahnstange angeordnet ist, welche mit einem Ritzel eines auf der vertikalen Säule angeordneten ersten Getriebemotors in Eingriff steht.

Mit Hilfe dieser Bauart ist eine effiziente und genaue Bewegung des Greifers möglich.

Weiters kann vorgesehen sein, daß die vertikale Säule aus zwei parallelen Stehern gebildet ist, zwischen denen ein den horizontalen Schwenkarm tragender Schlitten höhenverstellbar angeordnet ist.

Hiermit wird eine relativ spielfreie und kräftige Führung des Schwenkarms erzielt.

In diesem Zusammenhang kann in Weiterbildung der Erfindung vorgesehen sein, daß an der vertikalen Säule in Längsrichtung eine sich über deren Längsachse erstreckende Zahnstange angeordnet ist, welche mit einem Ritzel eines auf dem Schlitten angeordneten zweiten Getriebemotors in Eingriff steht.

Die Verwendung dieser Möglichkeit stellt einen spielfreien Antrieb der Schwenkarmhöhenverstellung dar.

Eine weitere bevorzugte Ausführungsform der Erfindung kann darin bestehen, daß der Greifarm aus zumindest zwei miteinander verbundenen, zueinander verschwenkbaren Armelementen gebildet ist, daß das erste Ende des ersten Armelementes schwenkbar in einer auf der Platte angeordneten Lagerung gelagert ist, daß das andere Ende des ersten Armelementes am ersten Ende des zweiten Armelementes verschwenkbar gelagert ist, daß das zweite Ende des zweiten Armelementes am ersten Ende des dritten Armelementes verschwenkbar gelagert ist und daß am zweiten Ende des dritten Armelementes der Greifer angeordnet ist.

Bei einer derartigen Ausbildung des Greifarmes wird der Schwenkbereich des Roboter, d.h. der Bereich, in dem sich Teile des Greifarmes bewegen müssen, sehr klein gehalten. Dadurch können auch relativ enge Räume bzw. Mauern, die relativ knapp von schon bestehenden Mauerwerken beabstandet aufgebaut werden sollen, durch den erfindungsgemäßen Roboter gesetzt werden.

In Weiterbildung der Erfindung kann vorgesehen sein, daß der Greifer aus zwei parallel zueinander angeordneten Greifbacken gebildet ist, die an einer Backenträgerplatte derart verschiebbar angebracht sind, daß ihr Parallelabstand zueinander durch ihre gegenläufige Verschiebung zwischen einer offenen und einer greifenden Position veränderbar ist, daß die Backenträgerplatte über ein erstes Anpreßdruckkopplungsglied mit einer zu dieser parallel angeordneten und in Normalrichtung dazu verschiebbaren Zwischenplatte verbunden ist, daß die Zwischenplatte über ein zweites Anpreßdruckkopplungsglied mit einer parallel angeordneten und verschiebbaren Greifergrundplatte verbunden ist und daß die Greifergrundplatte um ihre Hochachse verschwenkbar im Schwenkarm bzw. im dritten Armelement gelagert ist.

Durch die Art, in der die Greifbacken bewegbar sind, erreicht man eine einfache und sichere Realisierung der Greiferfunktion. das heißt der Zugreif- und der Loslaßfunktion. Mit Hilfe der gegeneinander verschiebbaren Plattensysteme wird relativ einfach die notwendige Anpreßung der Ziegel erreicht.

In diesem Zusammenhang kann gemäß der Erfindung weiters vorgesehen sein, daß das erste und das zweite Anpreßdruckkopplungsglied aus einer Schraubenfeder gebildet ist.

Diese Anordnung erlaubt ein leichtes Erzeugen des notwendigen Ziegelanpreßdrucks in beide Richtungen.

Bei einer bevorzugten Ausführungsform der Erfindung kann vorgesehen sein, daß eine Ziegelzuführeinheit vorgesehen ist, mit der die Ziegel beförderbar, mit Kleber oder Mörtel, z. B. mit Dünnbettmörtel auf der Auflageseite benetzbar und in eine Entnahmeposition für den Greifer bewegbar sind.

Damit kommt ein erfindungsgemäßer Roboter mit nur einer einzigen Person, die die Ziegel auf die Ziegelzuführeinheit legt, aus. Da diese Person keine Fachkraft sein muß, verursacht sie auch nur geringe Kosten.

Weiters kann vorgesehen sein. daß die Ziegelzuführeinheit ein Staufördersystem umfaßt, an dieses anschließend Mörtelauftragswalzen, die in ein Kleber-bzw. Mörtelbad ragen, angeordnet sind und daran anschließend eine Fördereinheit angeordnet ist, durch die ein benetzter Ziegel in die Entnahmeposition für den Greifer bewegbar ist.

Diese Anordnung hat den Vorteil, daß die zuvor plangeschliffenen Ziegel unter geringen mechanischen Belastungen zugeführt und mit Kleber bzw. Mörtel benetzbar sind. Die daraus resultierenden geringen Oberflächenbeschädigungen wirken sich positiv auf die Forderung nach exakt horizontalem Aufwachsen der Mauer aus.

Erfindungsgemäß besteht ein Verfahren zum automatischen Setzen eines aufgehenden Mauerwerks mit Hilfe eines erfindungsgemäßen Roboters darin, daß der Greifer durch Verschwenken der vertikalen Säule und/oder durch Höhenverstellung des horizontalen Schwenkarms und/oder durch die horizontale Verschiebung des Greifers entlang der Schwenkarmachse in die Entnahmeposition für den jeweils nächsten zu setzenden Ziegel gebracht wird, daß anschließend die Greifbacken in ihre greifende Position bewegt werden, daß danach der Greifer durch Verschwenken der vertikalen Säule und/oder durch Höhenverstellung des horizontalen Schwenkarms und/oder durch die horizontale Verschiebung des Greifers entlang der Schwenkarmachse an die Position bewegt wird, an die der Ziegel gesetzt werden soll, daß anschließend der Ziegel zunächst in horizontaler Richtung an den zuvor gesetzten Ziegel durch Verschiebung der Verfahrplattform angepreßt und danach in vertikaler Richtung durch Höhenverstellung des horizontalen Schwenkarms abgesetzt und angepreßt wird, daß anschließend die Greifbacken wieder in ihre geöffnete Position gebracht werden, daß nach jedem Ziegelsetzvorgang sich der gesamte Roboter unter Entlastung der zentralen Stützvorrichtung durch Ausfahren der Stützfüße auf diese statisch abstützt, danach die horizontale Verfahrplattform gegenüber der Grundplatte um eine Schrittweite, vorzugsweise einer Ziegelbreite, in Richtung der nächsten Setzposition verschoben wird, anschließend die Stützfüße in ihre eingefahrene Position bewegt werden, die zentrale Stützvorrichtung den Roboter statisch abstützt, dann die horizontale Grundplatte gegenüber der horizontalen Verfahrplattform nachgeführt wird und abschließend die Stützfüße wieder in ihre ausgefahrene Position bewegt werden.

Dieses Verfahren hat den Vorteil, daß der Greifer die Ziegel nur von einer vorgegebenen Position nehmen muß, er braucht keinerlei zusätzliche Bewegungen, wie etwa zur Ziegelzuführung oder Mörtelbenetzung ausführen, kann daher so schnell es ihm seine Antriebe erlauben, die Ziegel auf der Mauer plazieren.

Ein weiteres Verfahren zum automatischen Setzen eines aufgehenden Mauerwerks mit Hilfe eines erfindungsgemäßen Roboters kann darin bestehen, daß der Greifer durch Verschwenken der Platte und/oder durch Verschwenken der Armelemente in die Entnahmeposition für den jeweils nächsten zu setzenden Ziegel gebracht wird. daß anschließend die Greifbacken in ihre greifende Position bewegt werden, daß danach der Greifer durch Verschwenken der Armelemente an die Position bewegt wird, an die der Ziegel gesetzt werden soll, daß anschließend der Ziegel zunächst in horizontaler Richtung an den zuvor gesetzten Ziegel durch Verschiebung der Verfahrplattform angepreßt und danach in vertikaler Richtung durch entsprechendes Verschwenken der Armelemente abgesetzt und angepreßt wird, daß anschließend die Greifbacken wieder in ihre geöffnete Position gebracht werden, daß nach jedem Ziegelsetzvorgang sich der gesamte Roboter unter Entlastung der zentralen Stützvorrichtung durch Ausfahren der Stützfüße auf diese statisch abstützt, danach die horizontale Verfahrplattform gegenüber der Grundplatte um eine Schrittweite, vorzugsweise einer Ziegelbreite, in Richtung der nächsten Setzposition verschoben wird, anschließend die Stützfüße in ihre eingefahrene Position bewegt werden, die zentralen Stützvorrichtung den Roboter statisch abstützt, dann die horizontale Grundplatte gegenüber der horizontalen Verfahrplattform nachgeführt wird und abschließend die Stützfüße wieder in ihre ausgefahrene Position bewegt werden.

Bei Anwendung dieses Verfahrens wird ein nur relativ kleiner freier Bereich für den Roboter benötigt.

Weiters kann bei einem erfindungsgemäßen Verfahren vorgesehen sein, daß bei Abstützen durch die zentrale Stützvorrichtung die horizontale Verfahrplattform gegenüber der vertikalen Säule und somit gegenüber der zentralen Stützvorrichtung um einen Winkel, der dem Eckwinkel entspricht, verschwenkt wird.

Diese Möglichkeit erlaubt dem Anwender mit Hilfe des Roboters auch Ecken, Vorsprünge o.ä. in seine Mauer einzubauen; der Roboter wird somit universell für nahezu alle Mauerformen einsetzbar.

Eine Weiterbildung des erfindungsgemäßen Verfahrens kann vorsehen, daß ein als nächstes zu setzender Ziegel durch einen Anschlag der Ziegelzuführung in der Entnahmeposition für den Greifer gehalten wird, daß nachdem der Greifer diesen von seiner Position genommen hat, die vordere Ziegelstopeinrichtung den nächsten Ziegel freigibt, daß dieser über die Mörtelauftragswalzen bis zum Ziegelanschlag gelangt, daß anschließend die vordere Ziegelstopeinrichtung wieder in ihre sperrende Position gebracht wird und daß die hintere Ziegelstopeinrichtung die nachfolgenden Ziegel und freigibt, daß wenn der Ziegel an der vorderen Ziegelstopeinrichtung angelangt ist, die hintere Ziegelstopeinrichtung in ihre sperrende Position gebracht wird.

Die Vorgangsweise nach diesem Verfahren hat den Vorteil, daß die Ziegelzuführung zur Entnahmeposition und die Benetzung der Ziegel mit Kleber bzw. Mörtel automatisch sowie schnell und genau erfolgt, daß somit die Arbeitskraft, die den Mörtel vorbereiten muß und die, die die den Mörtel auf die Ziegel auftragen muß, eingespart werden. Es werden alle denkbaren Dosierfehler und Positionierungsfehler sehr gering gehalten.

Bei einer bevorzugten Ausführungsform des Verfahrens kann vorgesehen sein, daß die Ziegel an ihren Stirnseiten von den Greifbacken aufgegriffen werden und daß die Ziegel mit ihren Breitseiten aneinanderliegend verlegt werden.

Dadurch können gegenüber der herkömmlichen Methode, die Ziegel Stirnseite an Stirnseite zu verlegen in einem Arbeitsgang entsprechend dickere Mauerwerke aufgebaut werden.

Die Erfindung wird nun anhand der in den Zeichnungen dargestellten Ausführungsformen eines erfindungsgemäßen Roboters erklärt. Dabei zeigt:
Fig. 1 die Gesamtansicht eines erfindungsgemäßen Roboter im Aufriß;
Fig.2a,b im vergrößerten Maßstab die Verfahreinheit mit Dreheinheit des Roboters gemäß Fig. 1 im Auf- und Grundriß;
Fig.3a,b im vergrößerten Maßstab den Greifer des Roboters gemäß Fig. 1 in Vorder- und Seitenansicht;
Fig.4a.b im vergrößerten Maßstab die Ziegelzuführeinrichtung des Roboters gemäß Fig. 1 in Auf- und Grundriß;
Fig. 5 im vergrößerten Maßstab den Roboter gemäß Fig. 1 bei der Ausführung des erfindungsgemäßen Verfahrens im Grundriß und
Fig.6 eine weitere Ausführungsform des erfindungsgemäßen Roboters im Aufriß.

Ein erfindungsgemäßer Roboter ist für die selbständige Errichtung einer Ziegelmauer konzipiert. Der Einsatz eines solchen erfindungsgemäßen Roboters setzt erstens das Vorhandensein eines Betonsockels, auf dem die Mauer aufgebaut werden soll und zweitens eine als Referenz dienende bereits vollständig z. B. händisch gesetzte unterste Ziegelreihe voraus. Um gewährleisten zu können, daß die Ziegelmauer genau waagrecht aufgebaut wird, müssen alle in Folge verwendeten Ziegel gleiche Höhe und plangeschliffene, genau parallele Deckflächen aufweisen. Die einzelnen Ziegel werden nicht wie üblich mit Mörtel verbunden, sondern mit einem Dünnbettmörtel verklebt, um ein ebenes, exakt horizontales Aufwachsen der Mauer sicherzustellen.

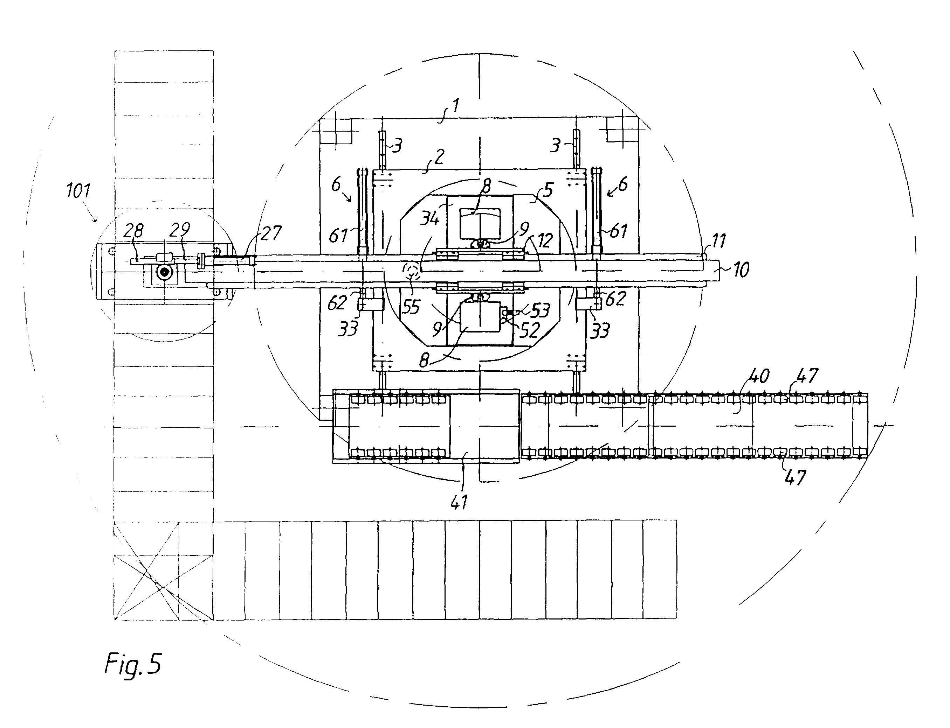

Bei dieser Ausführungsform des erfindungsgemäßen Verfahrens werden die Ziegel nicht wie üblich mit der Stimseite aneinander gelegt, sondern die Greifzange greift die Ziegel an den Stirnseiten an und legt sie mit ihren Breitseiten aneinander. Eine schematische Darstellung einer auf diese Art entstehenden Mauer ist in Fig. 5 dargestellt. Durch entsprechende Änderung der Ansteuersoftware des erfindungsgemäßen Roboters ist es jedoch möglich, ihn so zu programmieren, daß die Ziegel an der Breitseite aufgegriffen und Stirnseite an Stimseite verlegt werden.

Der erste Ziegel einer jeden durch den Roboter gelegten Ziegelreihe wird an der entsprechenden Position einfach senkrecht auf die schon bestehenden Reihen aufgesetzt. Bei jedem weiteren Ziegel orientiert sich die Greifzange zusätzlich am Vorderziegel in der Art, daß der zu setzende Ziegel zunächst horizontal an den Vorderziegel angedrückt und dann vertikal abgesetzt wird. Die Position des Roboters wird mit zwei Systemen gesteuert. Das erste System ermittelt und regelt den Abstand zur zu setzenden Mauer, das zweite System bestimmt die absolute Position des Roboters auf der Betondecke. Mit Hilfe der Steuersoftware des Roboters werden die "Daten" der Mauer, wie z.B.: Ecken und Position der Fenster bzw. Türen, beim Aufbau berücksichtigt.

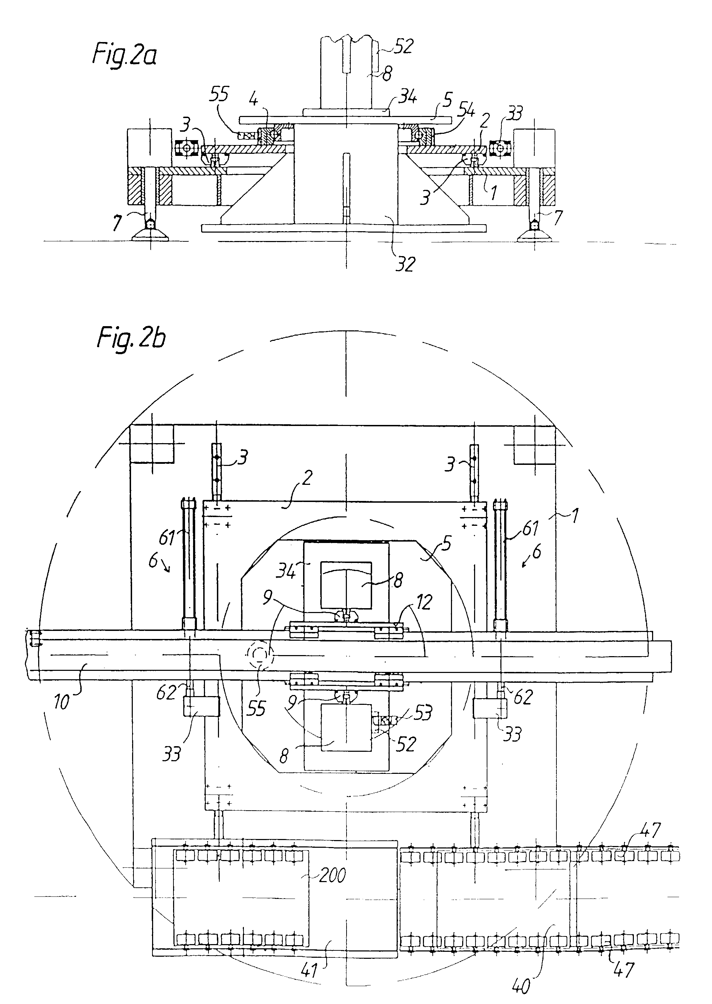

Das wichtigste Detail der Erfindung stellt die selbständige Fortbewegung, das "Gehen" des Roboters dar. Die Fig. 2a,b zeigt die Grundplatte des Roboters mit der darauf angebrachten Verfahr- und Dreheinheit.

Dabei ist einerseites eine den Greifarm 80 tragende zentrale Stützvorrichtung 32, auf welcher der gesamte Roboter statisch abstützbar ist, und andererseits eine periphere Stützvorrichtung mit zwischen einer eingefahrenen und einer ausgefahrenen Position höhenverstellbaren Stützfüßen 7 vorgesehen, in welcher eingefahrenen Position der gesamte Roboter mit der zentralen Stützvorrichtung 32 auf dem Untergrund statisch abgestützt ist und in welcher ausgefahrenen Position der gesamte Roboter mit den Stützfüßen 7 auf dem Untergrund statisch abgestützt ist. Die periphere Stützvorrichtung ist in Richtung parallel zur zu setzenden Ziegelschar gegenüber der zentralen Stützvorrichtung 32 um eine vorbestimmbare Schrittweite verschiebbar.

Bei der in der Zeichnung dargestellten Ausführungsform des erfindungsgemäßen Roboters sind die Stützfüße 7 der peripheren Stützvorrichtung auf einer horizontalen Grundplatte 1 angeordnet, die zentrale Stützvorrichtung 32 ist aus einem Hohlzylinder, der fest mit einer Bodenplatte verbunden ist und mit Stützflügeln versehen ist, gebildet.

Die zentrale Stützvorrichtung 32 ist durch ein Schwenklager 4 und durch die horizontale Grundplatte 1 hindurchverlaufend angeordnet, wobei das Schwenklager 4 einerseits mit der zentralen Stützvorrichtung 32 und andererseits mit einer horizontalen Verfahrplattform 2 verbunden ist, welche Verfahrplattform 2 gegenüber der horizontalen Grundplatte 1 verschiebbar ist.

Die Verschiebung der horizontalen Verfahrplattform 2 gegenüber der horizontalen Grundplatte 1, bzw. der horizontalen Grundplatte 1 gegenüber der horizontalen Verfahrplattform 2 in Richtung parallel zur zu setzenden Ziegelschar erfolgt entlang zweier Führungen 3 durch zwei vorzugsweise aus Kolben 62 und Zylinder 61 gebildeten Verfahrantriebe 6, welche mit ihren einen Enden mit der Grundplatte 1 und mit ihren anderen Enden mit der horizontalen Verfahrplattform 2 fest verbunden sind.

Die Grundplatte 1 ist bei der in der Zeichnung dargestellten Ausführungsform der Erfindung quadratisch mit je einem Stützfuß 7 an ihren Eckpunkten und mit einem vorzugsweisen kreisförmigen Durchbruch in ihrer Mitte gebildet, durch welchen Durchbruch die zentrale Stützvorrichtung 32 durchgeführt ist.

Durch diese spezielle Bauweise ist die Ausführung einer Fortbewegung des Roboters in Form eines "Gehens" auf einfache Weise möglich. Während des Aufgreifens bzw. des Absetzen eines Ziegels stützt sich der Roboter auf den Stützfüßen 7 ab. Zum Zwecke der Ausführung eines "Schrittes" werden die Stützfüße 7 in ihre eingefahrene Position gebracht und der Roboter dadurch auf seiner zentralen Stützvorrichtung 32 abgestützt. Somit kann nun die Grundplatte 1 mit den darauf angeordneten Stützfüßen 7 mit Hilfe der Verfahrantriebe 6 in der beabsichtigten Fortbewegungsrichtung verschoben werden. Anschließend werden die Stützfüße 7 wieder in ihre ausgefahrene Position gebracht. die zentrale Stützvorrichtung 32 also entlastet. Mit Hilfe der Verfahrantriebe 6 kann jetzt die horizontale Verfahrplattform 2 in Fortbewegungsrichtung bewegt werden und der "Schritt" abgeschlossen werden.

Das oben erwähnte Schwenklager 4 ist durch ein Kugellager gebildet, dessen Innenwalze an der einen Seite fest mit dem Greifarm 80 verbunden und dessen Außenwalze an der anderen Seite fest mit der horizontalen Verfahrplattform 2 verbunden ist. wobei die Verbindung des Kugellagers mit dem Greifarm 80 durch eine erste Platte 5 und eine zweite Platte 34 erfolgen kann. Anstatt des Kugellagers kann jedoch auch jede andere Verbindung. die eine Verschwenkbewegung des Greifarmes 80 gegenüber der horizontalen Verfahrplattform 2 zuläßt, eingesetzt werden.

Bei den in den Zeichnungen dargestellten Ausführungsformen eines erfindungsgemäßen Roboters ist an der Außenwalze des Kugellagers eine Verzahnung 54 angebracht, die mit einem Ritzel 55 eines an der Platte 5 angeordneten dritten Getriebemotors in Eingriff steht. Mithilfe dieser Anordnung können die Verschwenkbewegungen des Greifarmes 80 durchgeführt werden.

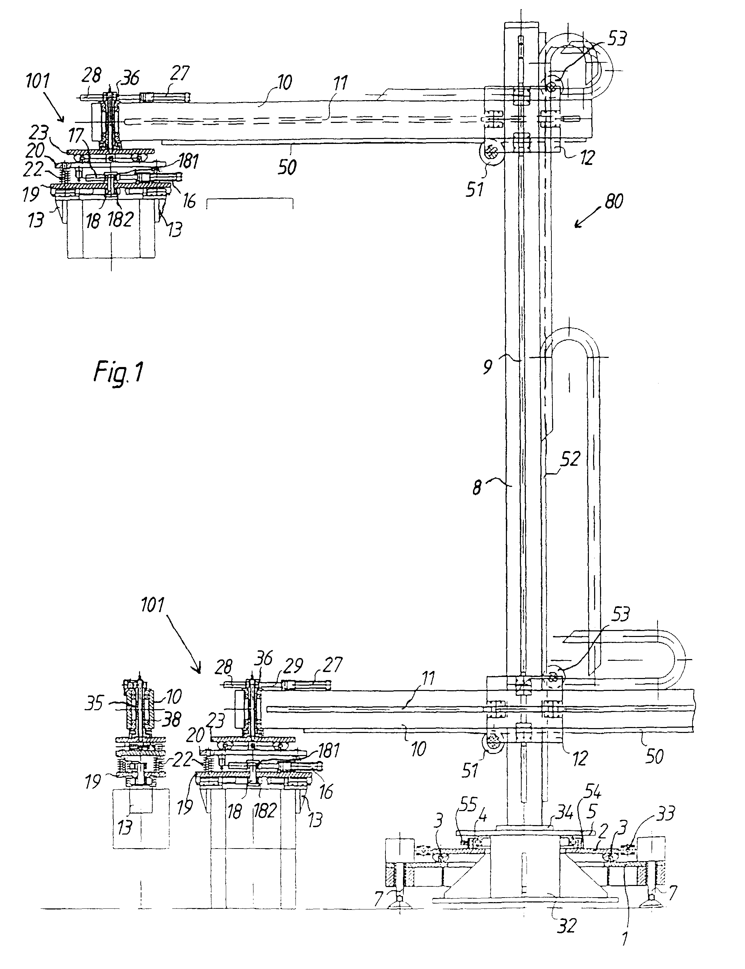

Eine erfindungsgemäße Ausführungsform des Roboters ist in Fig. 1 dargestellt. Dabei ist der Greifarm 80 aus einem horizontalen Schwenkarm 10 gebildet, an dem ein Greifer 101 zum Aufnehmen und Absetzen eines Ziegels entlang der Schwenkarmachse gegenüber einer vertikalen Säule 8 horizontal verschiebbar angeordnet ist. Diese horizontale Bewegung entlang der Schwenkarmeachse ist bei einem erfindungsgemäßen Roboter, wie in der Zeichnung dargestellt, dadurch realisiert, daß der Greifer 101 an einem Ende des horizontalen Schwenkarmes 10 durch eine Welle 36 mit dem Schwenkarm 10 verbunden ist. Die Welle 36 verläuft durch eine mit Kugellager 38 versehenen Bohrung 37 und ist mit einem Sicherungselement 39 gegen Herausfallen noch unten gesichert. Der horizontale Schwenkarm 10 ist entlang einer Führungschiene 11 horizontal gegenüber der vertikalen Säule 8 verschiebbar. Eine andere Möglichkeit bestünde darin, den Schwenkarm 10 fix an dem Schlitten 12 anzuordnen und lediglich den Greifer 101 entlang des Schwenkarmes verschiebbar anzubringen.

Der Antrieb der Schwenkarmverschiebung wird bei der in der Zeichnung dargestellten Ausführungsform der Erfindung dadurch erzeugt, daß am horizontalen Schwenkarm 10 eine sich über dessen Längsachse erstreckende Zahnstange 50 angeordnet ist, welche mit einem Ritzel 51 eines ersten Getriebemotors in Eingriff steht.

Der Geriebemotor muß im ersten Fall im Schlitten 12, somit also auf der vertikalen Säule 8, oder im zweiten Fall am Greifer 101 angebracht sein.

Der Schwenkarm 10 ist auf der vertikalen Säule 8 höhenverstellbar angeordnet. Bei der in der Zeichnung dargestellten Ausführungsform ist diese vertikale Säule aus zwei parallelen Stehern 8 gebildet. Zwischen diesen ist ein den horizontalen Schwenkarm 10 tragender Schlitten 12 angeordnet.

Die Höhenverstellung erfolgt bei der in der Zeichnung dargestellten Ausführungsform entlang einer Führung 9. An der vertikalen Säule 8 ist eine sich über deren Längsachse erstreckende Zahnstange 52 angeordnet, welche mit einem Ritzel 53 eines auf dem Schlitten 12 angeordneten zweiten Getriebemotors in Eingriff steht.

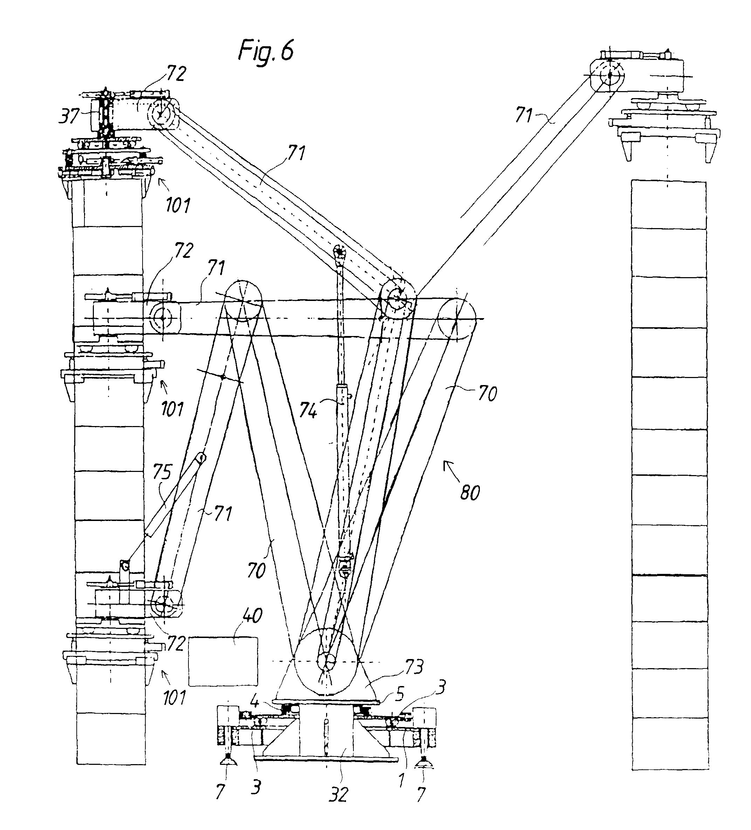

Eine andere Ausführungsform des Roboters ist in Fig.6 dargestellt. Der "Fuß". d.h. die zentrale Stützvorrichtung 32, die Grundplatte 1 und die vertikale Verfahrplattform 2 sind genauso wie bei der zuvor beschriebenen Ausführungsvariante aufgebaut und miteinander verbunden. Der Greifarm 80 des Roboters ist hier allerdings aus drei miteinander verbundenen, zueinander verschwenkbaren Armelementen 70, 71, 72 gebildet. Das erste Ende des ersten Armelementes 70 ist in einer auf der Platte 5 angeordneten Lagerung 73 schwenkbar gegenüber der Grundplatte 1 gehalten, das andere Ende des ersten Armelelementes 70 ist am ersten Ende des zweiten Armelementes 71 gegenüber diesem verschwenkbar gelagert, und das zweite Ende des zweiten Armelementes 71 ist am ersten Ende des dritten Armelementes 72 verschwenkbar gelagert. Die Durchführung der im Betrieb notwendigen Schwenkbewegungen der einzelnen Armelemente 70, 71 und 72 kann, wie in der Zeichnung dargestellt, durch Hydraulikzylinder 74, 75 erfolgen. Es können jedoch auch andere zweckmäßige Antriebe, wie z.B. Pneumatikzylinder, Zahnstangen-Zahnrad-Kominationen od. dgl. eingesetzt werden.

Am zweiten Ende des dritten Armelementes 72 ist ein Greifer 101 angeordnet. Dieser ist gleichartig wie der Greifer der zuvor beschriebenen Ausführungsform aufgebaut und wird im folgenden beschrieben.

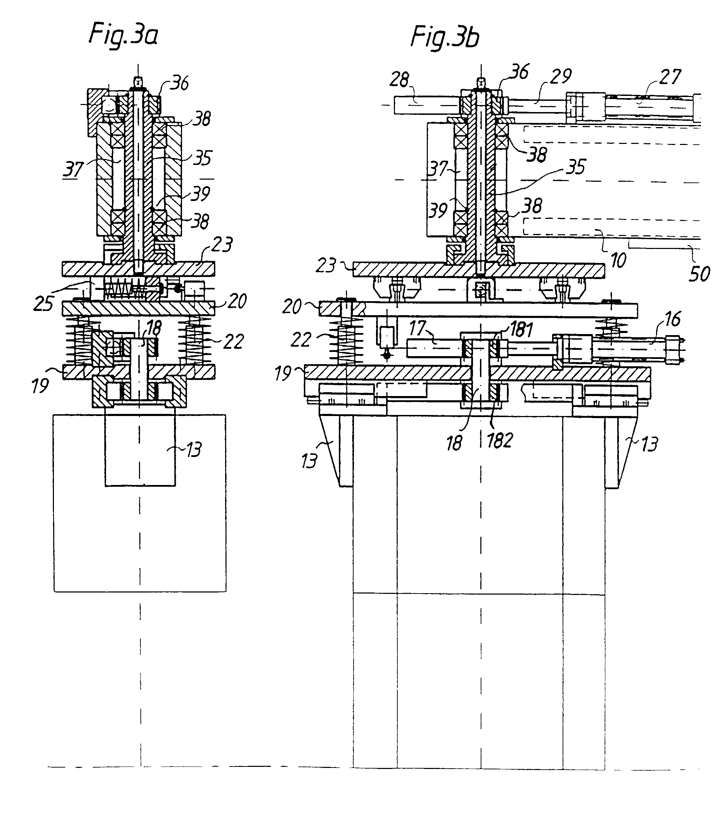

Fig. 3a,b stellt einen derartigen Greifer 101 im Detail dar. Der Greifer 101 besteht aus zwei parallel zueinander angeordneten Greifbacken 13, die an einer Backenträgerplatte 19 derart verschiebbar angeordnet sind, daß ihr Parallelabstand zueinander durch ihre gegenläufige Verschiebung zwischen einer offenen und einer greifenden Position veränderbar ist. Die gegenläufige Verschiebung der Greifbacken 13 wird in der in der Zeichnung dargestellten Ausführungsform dadurch erreicht, daß ein Zylinder 16, an dessen Kolbenstange eine Zahnstange 17 montiert ist, eine Backenantriebseinheit 18 über ein erstes Zahnrad 181 dreht und daß diese Drehbewegung über ein zweites Zahnrad 182 und den beiden Backenbewegungszahnstangen 15, die an gegenüberliegenden Punkten des Zahnrades 182 in dieses eingreifen, in horizontale, geradlinige Bewegungen der Backen umwandelt wird. Die Backenträgerplatte 19 ist über ein erstes Anpreßdruckkopplungsglied 22 mit einer zu dieser parallel angeordneten und in Normalrichtung dazu verschiebbaren Zwischenplatte 20 verbunden, was bei dem in der Zeichnung dargestellten erfindungsgemäßen Roboter dadurch realisiert ist, daß an den vier Ecken der rechteckförmigen Backenträgerplatte 19 Hohlzylinder angebracht sind, daß in diese Hohlzylinder Stangen, die auf der Zwischenplatte 20 angebracht sind, hineinragen und somit bei Abstandsänderungen der beiden Platten 19 und 20 als Führung wirken. Die Zwischenplatte 20 ist über ein zweites Anpreßdruckkopplungsglied 25 mit einer parallel angeordneten und verschiebbaren Greifergrundplatte 23 verbunden. Als Führung dieser Verschiebemöglichkeit sind bei dem in der Zeichnung dargestellten erfindungsgemäßen Roboter die Führungen 24 vorgesehen, das Anpreßdruckkopplungsglied 25 ist genauso wie das zur Kopplung der Backenträgerplatte 19 mit der Zwischenplatte 20 eingesetzte Anpreßdruckkopplungsglied 22 aus einer Schraubenfeder gebildet. Bei dem in der Zeichnung dargestellten erfindungsgemäßen Roboter ist nur ein Anpreßdruckkopplungsglied 25, welches zentral an der Greifergrundplatte 23 angeordnet ist, vorhanden.

Die Greifergrundplatte 23 ist um ihre Hochachse verschwenkbar im Schwenkarm 10 bzw. im dritten Armelement 72 gelagert. Bei den in den Zeichnungen dargestellten erfindungsgemäßen Robotern wird diese verschwenkbare Lagerung durch eine Bohrung 37 im Schwenkarm 10 bzw. im dritten Armelement 72, an deren oberen und unteren Ende je zwei Kugellager 38 angebracht sind. welche Kugellager 38 die Achse 35 aufnehmen, erreicht. Die eigentliche Verschwenkung der Greifergrundplatte 23 wird durch ein Zahnrad 36. das am obersten Ende der Achse 35 angeordnet ist und in Eingriff mit einer Zahnstange 28, welche fest mit dem Kolben 29 eines Zylinders 27 verbunden ist, steht, erreicht. Der Zylinder 27 selbst ist an der Oberseite des Schwenkarms 10 bzw. des dritten Armelementes 72 angeordnet.

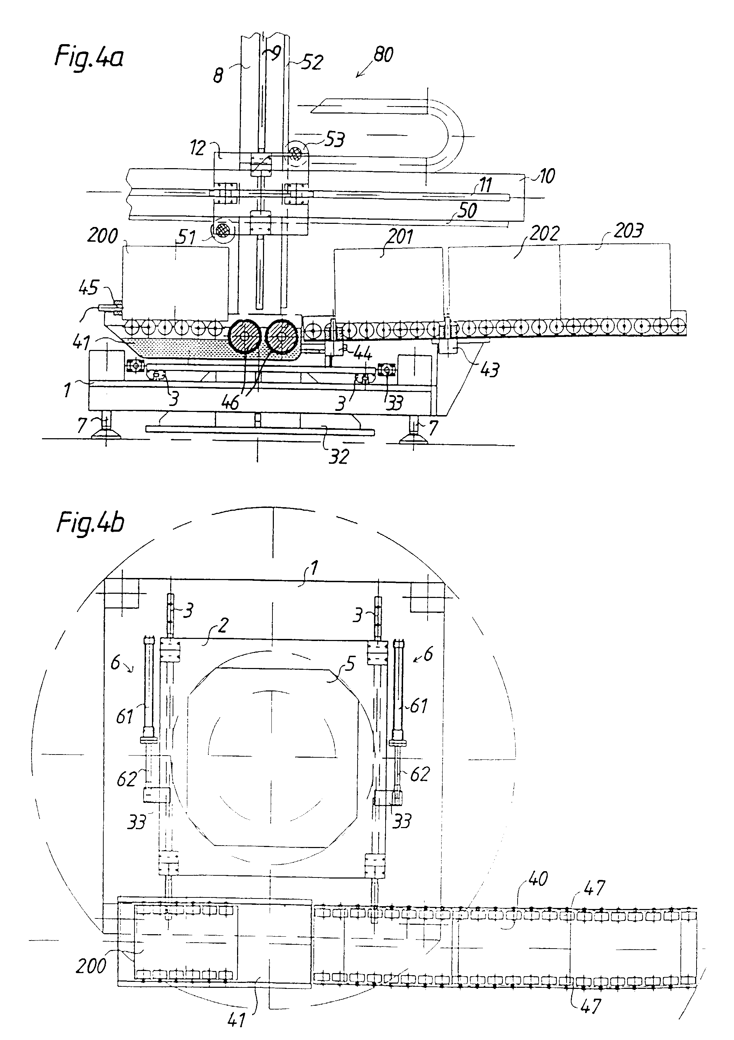

Fig. 4a,b zeigt eine erfindungsgemäße Ziegelzuführeinrichtung, mit welcher die Ziegel 200, 201, 202, 203 beförderbar, mit Kleber oder Mörtel, z.B. mit Dünnbettmörtel auf der Auflageseite benetzbar und in eine Entnahmeposition für den Greifer 101 bewegbar sind. Die Ziegelzuführung umfaßt ein Staufördersystem 40, an das sich Mörtelauftragswalzen 46, die in ein Kleber- bzw. Mörtelbad 41 ragen, sowie eine Fördereinheit, durch die ein benetzter Ziegel in die Entnahmeposition für den Greifer 101 bewegbar ist, anschließen. Bei der in der Zeichnung dargestellten Ausführungsform besteht das Staufördersystem 40 aus zwei parallelen im Abstand einer Ziegelbreite angeordneten Rollenreihen 47.

Nachstehend ist der Ziegelsetzvorgang mit einem Roboter der Ausführungsform nach Fig. 1 beschrieben.

Der erfindungsgemäße Roboter ist auf seinen Stützfüßen 7 statisch abgestützt. Durch Verschwenken der vertikalen Säule 8 und/oder durch Höhenverstellung des horizontalen Schwenkarms 10 und/oder durch die horizontale Verschiebung des Greifers 101 entlang der Schwenkarmachse wird der Greifer 101 in die Entnahmeposition für den jeweils nächsten zu setztenden Ziegel 200 gebracht. Die Greifbacken 13 werden anschließend von ihrer offenen in ihre greifende Position bewegt. Anschließend wird der Greifer 101 durch Verschwenken der vertikalen Säule 8 und/oder durch Höhenverstellung der horizontalen Schwenkarms 10 und/oder durch die horizontale Verschiebung des Greifers 101 entlang der Schwenkarmachse in die Position bewegt, an die der nächste Ziegel 200 gesetzt werden soll. Dort wird der Ziegel 200 zunächst an den zuvor gesetzten Ziegel in horizontaler Richtung durch Verschiebung der Verfahrplattform 2 angepreßt und danach in vertikaler Richtung durch Höhenverstellung des horizontalen Schwenkarms 10 abgesetzt und angepreßt. Anschließend werden die Greifbacken 13 wieder in ihre offene Position gebracht. Der Greifer 101 wird nun erneut so verschoben und verschwenkt, daß er den nächsten zu setzenden Ziegel aufgreifen kann.

Nach jedem Ziegelsetzvorgang stützt sich der gesamte Roboter unter Entlastung der zentralen Stützvorrichtung 32 durch Ausfahren der Stützfüße 7 auf diese statisch ab. danach wird die horizontale Verfahrplattform 2 gegenüber der Grundplatte 1 um eine Schrittweite, vorzugsweise um eine Ziegelbreite, in Richtung der nächsten Setzposition verschoben. Anschließend werden die Stützfüße 7 in ihre eingefahrene Position bewegt, sodaß die zentrale Stützvorrichtung 32 den Roboter statisch abstützt, dann die horizontale Grundplatte 1 gegenüber der horizontalen Verfahrplattform 2 nachgeführt und abschließend die Stützfüße 7 wieder in ihre ausgefahrene Position gebracht.

Der Ziegelsetzvorgang mit einem Roboter der Ausführungsform nach Fig. 6 erfolgt im Prinzip genauso, wie eben beschrieben, der Greifer 101 wird dabei jedoch durch entsprechendes Verschwenken der einzelnen Armelemente 70, 71, 72 in die Entnahmeposition für den jeweils als nächsten zu setzenden Ziegel 200 und an die Position, an der der Ziegel 200 abgesetzt werden soll, gebracht.

Wird in der Phase der Bewegung, in der der Roboter auf seiner zentralen Stützvorrichtung 32 steht, die horizontale Verfahrplattform 2 gegenüber der Platte 5 und somit gegenüber der zentralen Stützvorrichtung 32 um einen Winkel verschwenkt, ist es einem erfindungsgemäßen Roboter auch möglich, nichtgeradlinige, z. B.: mit Ecken versehene aufgehende Mauerwerke zu errichten.

Die Ziegelzuführung funktioniert folgendermaßen. Der als nächstes zu setzende Ziegel wird durch einen Anschlag 45 der Ziegelzuführung in der Entnahmeposition für den Greifer 101 gehalten. Nachdem der Greifer den als Nächsten zu setzenden Ziegel 200 von seiner Position weggenommen hat, gibt die in Ziegelzufuhrrichtung zweite Ziegelstopeinrichtung 44 den nächsten Ziegel 201 frei, welcher über die Mörtelauftragswalzen 46 bis zum Ziegelanschlag 45 gelangt. Die zweite Ziegelstopeinrichung 44 wird wieder in ihre sperrende Position gebracht und die in Ziegelzufuhrrichtung erste Ziegelstopeinrichtung 43 gibt die nachfolgenden Ziegel 202 und 203 frei. Ist der Ziegel 202 an der zweiten Ziegelstopeinrichtung 44 angelangt, wird die erste Ziegelstopeinrichtung 43 in ihre sperrende Position gebracht.

Eine Besonderheit der beiden oben beschriebenen Verfahren besteht darin, daß die Ziegel an ihren Stirnseiten von den Greifbacken aufgegriffen werden und mit ihren Breitseiten aneinanderliegend verlegt werden, also nicht wie bei der herkömmlichen Methode eine Ziegelmauer aufzubauen, Stirnseite an Stirnseite verlegt werden. Wie schon eingangs angedeutet, kann durch entsprechende Änderung der Ansteuersoftware des Roboters jedoch auch eine Verlegung der Ziegel nach der herkömmlichen Verlegungsart erreicht werden.

## Patentansprüche

1. Roboter zum Ziegelsetzen für ein aufgehendes Mauerwerk mit einem Greifarm (80), wobei eine den Greifarm tragende zentrale Stützvorrichtung (32) vorgesehen ist, auf welche der gesamte Roboter statisch abstützbar ist, **dadurch gekennzeichnet,** daß eine periphere Stützvorrichtung mit zwischen einer eingefahrenen und einer ausgefahrenen Position höhenverstellbaren Stützfüßen (7) vorgesehen ist, in welcher eingefahrenen Position der gesamte Roboter mit der zentralen Stützvorrichtung (32) auf dem Untergrund statisch abgestützt ist und in welcher ausgefahrenen Position der gesamte Roboter mit den Stützfüßen (7) auf dem Untergrund statisch abgestützt ist, daß die zentrale Stützvorrichtung (32) durch einen ausschließlich zueinander unbewegliche Teile umfassenden unbeweglich am Greifarm (80) festgelegten Bauteil gebildet ist und daß die periphere Stützvorrichtung in Richtung parallel zur zu setzenden Ziegelschar gegenüber der zentralen Stützvorrichtung (32) um eine vorbestimmbare Schrittweite verschiebbar ist.

2. Roboter nach Anspruch 1, **dadurch gekennzeichnet,** daß die zentrale Stützvorrichtung (32) aus einem Hohlzylinder gebildet ist, der fest mit einer Bodenplatte verbunden und mit seitlichen Stützflügel versehen ist.

3. Roboter nach Anspruch 1 oder 2, **dadurch gekennzeichnet,** daß die Stützfüße (7) der peripheren Stützvorrichtung auf einer horizontalen Grundplatte (1) angeordnet sind, und daß die zentrale Stützvorrichtung (32) durch ein Schwenklager (4) und durch die horizontale Grundplatte (1) hindurchverlaufend angeordnet ist, wobei das Schwenklager (4) einerseits mit der zentralen Stützvorrichtung (32) und andererseits mit einer horizontalen Verfahrplattform (2) verbunden ist, welche Verfahrplattform (2) gegenüber der horizontalen Grundplatte (1) verschiebbar ist.

4. Roboter nach Anspruch 1, 2 oder 3, **dadurch gekennzeichnet,** daß das Schwenklager (4) durch ein Kugellager gebildet ist, dessen Innenwalze an der einen Seite fest mit der zentralen Stützvorrichtung (32) verbunden ist und dessen Außenwalze an der anderen Seite fest mit der horizontalen Verfahrplattform (2) verbunden ist.

5. Roboter nach Anspruch 4, **dadurch gekennzeichnet,** daß die Innenwalze des Kugellagers mit der zentralen Stützvorrichtung (32) über eine erste Platte (5) und gegebenenfalls über eine zweite Platte (34) verbunden ist.

6. Roboter nach Anspruch 4, **dadurch gekennzeichnet,** daß an der Außenwalze des Kugellagers eine Verzahnung (54) angebracht ist, die mit einem Ritzel (55) eines an der Platte (5) angeordneten dritten Getriebemotors in Eingriff steht.

7. Roboter nach einem der Ansprüche 1 bis 6, **dadurch gekennzeichnet,** daß die Verfahrplattform (2) entlang zweier Führungen (3) durch zwei vorzugsweise aus Kolben (62) und Zylinder (61) gebildeten Verfahrantriebe (6) gegenüber der Grundplatte (1) verschiebbar ist, welche mit ihren einen Enden mit der Grundplatte (1) und mit ihren anderen Enden mit der horizontalen Verfahrplattform (2) fest verbunden sind.

8. Roboter nach einem der Ansprüche 1 bis 7, **dadurch gekennzeichnet,** daß die Grundplatte (1) quadratisch mit je einem Stützfuß (7) an ihren Eckpunkten und mit einem vorzugsweise kreisförmigen Durchbruch in ihrer Mitte gebildet ist, durch welchen Durchbruch die zentrale Stützvorrichtung (32) durchgeführt ist.

9. Roboter nach einem der Ansprüche 1 bis 8, **dadurch gekennzeichnet,** daß der Greifarm (80) durch einen horizontalen Schwenkarm (10) gebildet ist, welcher mit einem entlang der Schwenkarmachse verschiebbaren Greifer (101) zum Aufnehmen und Absetzen eines Ziegels auf einer vertikalen Säule (8) höhenverstellbar angeordnet ist, und daß die vertikale Säule (8) an ihrem unteren Ende in dem auf der horizontalen Verfahrplattform (2) angeordneten Schwenklager (4) um ihre Längsachse verschwenkbar ist bzw. das Schwenklager (4) mit der horizontalen Verfahrplattform (2) um die Säule (8) verschwenkbar ist.

10. Roboter nach Anspruch 9, **dadurch gekennzeichnet,** daß der Greifer (101) mit einem Ende des horizontalen Schwenkarms (10) verbunden ist und daß der horizontale Schwenkarm (10) entlang einer Führungsschiene (11) horizontal gegenüber der vertikalen Säule (8) verschiebbar ist.

11. Roboter nach Anspruch 10, **dadurch gekennzeichnet,** daß am horizontalen Schwenkarm (10) eine sich über dessen Längsachse erstreckende Zahnstange (50) angeordnet ist, welche mit einem Ritzel (51) eines auf der vertikalen Säule (8) angeordneten ersten Getriebemotors in Eingriff steht.

12. Roboter nach einem der Ansprüche 9 bis 11, **dadurch gekennzeichnet,** daß die vertikale Säule aus zwei parallelen Stehern (8) gebildet ist, zwischen denen ein den horizontalen Schwenkarm (10) tragender Schlitten (12) höhenverstellbar angeordnet ist.

13. Roboter nach Anspruch 12, **dadurch gekennzeichnet,** daß an der vertikalen Säule (8) in Längsrichtung eine sich über deren Längsachse erstreckende Zahnstange (52) angeordnet ist, welche mit einem Ritzel (53) eines auf dem Schlitten (12) angeordneten zweiten Getriebemotors in Eingriff steht.

14. Roboter nach einem der Ansprüche 1 bis 8, **dadurch gekennzeichnet,** daß der Greifarm (80) aus zumindest zwei miteinander verbundenen, zueinander verschwenkbaren Armelementen (70, 71, 72) gebildet ist, daß das erste Ende des ersten Armelementes (70) schwenkbar in einer auf der Platte (5) angeordneten Lagerung (73) gelagert ist, daß das andere Ende des ersten Armelementes (70) am ersten Ende des zweiten Armelementes (71) verschwenkbar gelagert ist, daß das zweite Ende des zweiten Armelementes (71) am ersten Ende des dritten Armelementes (72) verschwenkbar gelagert ist und daß am zweiten Ende des dritten Armelementes (72) der Greifer (101) angeordnet ist.

15. Roboter nach einem der vorgehenden Ansprüche, **dadurch gekennzeichnet,** daß der Greifer (101) aus zwei parallel zueinander angeordneten Greifbacken (13) gebildet ist, die an einer Backenträgerplatte (19) derart verschiebbar angebracht sind, daß ihr Parallelabstand zueinander durch ihre gegenläufige Verschiebung zwischen einer offenen und einer greifenden Position veränderbar ist, daß die Backenträgerplatte (19) über ein erstes Anpreßdruckkopplungsglied (22) mit einer zu dieser parallel angeordneten und in Normalrichtung dazu verschiebbaren Zwischenplatte (20) verbunden ist, daß die Zwischenplatte (20) über ein zweites Anpreßdruckkopplungsglied (25) mit einer parallel angeordneten und verschiebbaren Greifergrundplatte (23) verbunden ist und daß die Greifergrundplatte (23) um ihre Hochachse verschwenkbar im Schwenkarm (10) bzw. im dritten Armelement (72) gelagert ist.

16. Roboter nach Anspruch 15, **dadurch gekennzeichnet,** daß das erste und das zweite Anpreßdruckkopplungsglied (22, 25) aus einer Schraubenfeder gebildet ist.

17. Roboter nach einem der vorgehenden Ansprüche, **dadurch gekennzeichnet,** daß eine Ziegelzuführeinheit vorgesehen ist, mit der die Ziegel beförderbar, mit Kleber oder Mörtel, z. B.: mit Dünnbettmörtel auf der Auflageseite benetzbar und in eine Entnahmeposition für den Greifer (101) bewegbar sind.

18. Roboter nach einem der vorgehenden Ansprüche, **dadurch gekennzeichnet,** daß die Ziegelzuführeinheit ein Staufördersystem (40) umfaßt, an dieses anschließend Mörtelauftragswalzen (46), die in ein Kleber- bzw. Mörtelbad (41) ragen, angeordnet sind und daran anschließend eine Fördereinheit angeordnet ist, durch die ein benetzter Ziegel in die Entnahmeposition für den Greifer (101) bewegbar ist.

19. Verfahren zum automatischen Setzen eines aufgehenden Mauerwerks mit Hilfe eines Roboters nach einem der Ansprüche 1 bis 13 und 15 bis 18, **dadurch gekennzeichnet,** daß der Greifer (101) durch Verschwenken der vertikalen Säule (8) und/oder durch Höhenverstellung des horizontalen Schwenkarms (10) und/oder durch die horizontale Verschiebung des Greifers (101) entlang der Schwenkarmachse in die Entnahmeposition für den jeweils nächsten zu setzenden Ziegel (200) gebracht wird, daß anschließend die Greifbacken (13) in ihre greifende Position bewegt werden, daß danach der Greifer (101) durch Verschwenken der vertikalen Säule (8) und/oder durch Höhenverstellung des horizontalen Schwenkarms (10) und/oder durch die horizontale Verschiebung des Greifers (101) entlang der Schwenkarmachse an die Position bewegt wird, an die der Ziegel (200) gesetzt werden soll, daß anschließend der Ziegel (200) zunächst in horizontaler Richtung an den zuvor gesetzten Ziegel durch Verschiebung der Verfahrplattform (2) angepreßt und danach in vertikaler Richtung durch Höhenverstellung des horizontalen Schwenkarms (10) abgesetzt und angepreßt wird, daß anschließend die Greifbacken (13) wieder in ihre geöffnete Position gebracht werden, daß nach jedem Ziegelsetzvorgang sich der gesamte Roboter unter Entlastung der zentralen Stützvorrichtung (32) durch Ausfahren der Stützfüße (7) auf diese statisch abstützt, danach die horizontale Verfahrplattform (2) gegenüber der Grundplatte (1) um eine Schrittweite, vorzugsweise einer Ziegelbreite, in Richtung der nächsten Setzposition verschoben wird, anschließend die Stützfüße (7) in ihre eingefahrene Position bewegt werden, die zentralen Stützvorrichtung (32) den Roboter statisch abstützt, dann die horizontale Grundplatte (1) gegenüber der horizontalen Verfahrplattform (2) nachgeführt wird und abschließend die Stützfüße (7) wieder in ihre ausgefahrene Position bewegt werden.

20. Verfahren zum automatischen Setzen eines aufgehenden Mauerwerks mit Hilfe eines Roboters nach einem der Ansprüche 1 bis 8 und 14 bis 17, **dadurch gekennzeichnet,** daß der Greifer (101) durch Verschwenken der Platte (5) und/oder durch Verschwenken der Armelemente (70, 71, 72) in die Entnahmeposition für den jeweils nächsten zu setzenden Ziegel (200) gebracht wird, daß anschließend die Greifbacken (13) in ihre greifende Position bewegt werden, daß danach der Greifer (101) durch Verschwenken der Armelemente (70, 71, 72) an die Position bewegt wird, an die der Ziegel (200) gesetzt werden soll, daß anschließend der Ziegel (200) zunächst in horizontaler Richtung an den zuvor gesetzten Ziegel durch Verschiebung der Verfahrplattform (2) angepreßt und danach in vertikaler Richtung durch entsprechendes Verschwenken der Armelemente (70. 71. 72) abgesetzt und angepreßt wird. daß anschließend die Greifbacken (13) wieder in ihre geöffnete Position gebracht werden, daß nach jedem Ziegelsetzvorgang sich der gesamte Roboter unter Entlastung der zentralen Stützvorrichtung (32) durch Ausfahren der Stützfüße (7) auf diese statisch abstützt, danach die horizontale Verfahrplattform (2) gegenüber der Grundplatte (1) um eine Schrittweite. vorzugsweise einer Ziegelbreite, in Richtung der nächsten Setzposition verschoben wird. anschließend die Stützfüße (7) in ihre eingefahrene Position bewegt werden, die zentralen Stützvorrichtung (32) den Roboter statisch abstützt, dann die horizontale Grundplatte (1) gegenüber der horizontalen Verfahrplattform (2) nachgeführt wird und abschließend die Stützfüße (7) wieder in ihre ausgefahrene Position bewegt werden.

21. Verfahren zum automatischen Setzen eines nicht geradlinigen, z. B.: mit Ecken versehenen aufgehenden Mauerwerks nach einem der Ansprüche 19 oder 20, **dadurch gekennzeichnet,** daß bei Abstützen durch die zentrale Stützvorrichtung (32) die horizontale Verfahrplattform (2) gegenüber der Platte (5) und somit gegenüber der zentralen Stützvorrichtung (32) um einen Winkel, der dem Eckwinkel entspricht, verschwenkt wird.

22. Verfahren nach Anspruch 21 mit einer automatischen Ziegelzuführeinrichtung, **dadurch gekennzeichnet,** daß ein als Nächsten zu setzender Ziegel (200) durch einen Anschlag (45) der Ziegelzuführung in der Entnahmeposition für den Greifer (101) gehalten wird, daß nachdem der Greifer (101) diesen von seiner Position genommen hat, die in Ziegelzufuhrrichtung zweite Ziegelstopeinrichtung (44) den nächsten Ziegel (201) freigibt, daß dieser über die Mörtelauftragswalzen (46) bis zum Ziegelanschlag (45) gelangt, daß anschließend die zweite Ziegelstopeinrichtung (44) wieder in ihre sperrende Position gebracht wird und daß die in Ziegelzufuhrrichtung erste Ziegelstopeinrichtung (43) die nachfolgenden Ziegel (202) und (203) freigibt, daß wenn der Ziegel (202) an der zweiten Ziegelstopeinrichtung (44) angelangt ist, die erste Ziegelstopeinrichtung (43) in ihre sperrende Position gebracht wird.

23. Verfahren nach einem der Ansprüche 19 bis 22, **dadurch gekennzeichnet,** daß die Ziegel an ihren Stirnseiten von den Greifbacken (13) aufgegriffen werden und daß die Ziegel mit ihren Breitseiten aneinanderliegend verlegt werden.

## Claims

1. Robot for brick positioning for a vertical wall having a gripping arm (80), a central supporting apparatus (32) being provided to which the gripping arm is fitted and on which the entire robot can be supported statically, characterized in that a peripheral supporting apparatus is provided having supporting feet (7) whose height is adjustable between a retracted and an extended position, in which retracted position the entire robot is statically supported by means of the central supporting apparatus (32) on the ground, and in which extended position the entire robot is statically supported by means of the supporting feet (7) on the ground, in that the central supporting apparatus (32) is formed by a structural part which comprises exclusively parts which cannot move with respect to one another and is fixed in a non-moving manner on the gripping arm (80), and in that the peripheral supporting apparatus can be moved through a step width, which can be predetermined, with respect to the central supporting apparatus (32), in the direction parallel to the group of bricks to be positioned.

2. Robot according to Claim 1, characterized in that the central supporting apparatus (32) is formed from a hollow cylinder which is firmly connected to a base plate and is provided with supporting vanes at the sides.

3. Robot according to Claim 1 or 2, characterized in that the supporting feet (7) of the peripheral supporting apparatus are arranged on a horizontal base plate (1), and in that the central supporting apparatus (32) is arranged such that it passes through a pivoting bearing (4) and through the horizontal base plate (1), the pivoting bearing (4) being connected on the one hand to the central supporting apparatus (32) and on the other hand to a horizontal traversing platform (2), which traversing platform (2) can be moved with respect to the horizontal base plate (1).

4. Robot according to Claim 1, 2 or 3, characterized in that the pivoting bearing (4) is formed by a ball bearing whose inner roller is firmly connected on one side to the central supporting apparatus (32) and whose outer roller is firmly connected on the other side to the horizontal traversing platform (2).

5. Robot according to Claim 4, characterized in that the inner roller of the ball bearing is connected to the central supporting apparatus (32) via a first plate (5) and, possibly, via a second plate (34).

6. Robot according to Claim 4, characterized in that the outer roller of the ball bearing has applied to it a tooth system (54) which engages with a pinion (55) of a third drive motor, which is arranged on the plate (5).

7. Robot according to one of Claims 1 to 6, characterized in that the traversing platform (2) can be moved with respect to the base plate (1) along two guides (3) by means of two traversing drives (6) which are preferably formed from a piston (62) and a cylinder (61) and one ends of which traversing drives (6) are firmly connected to the base plate (1) while their other ends are connected to the horizontal traversing platform (2).

8. Robot according to one of Claims 1 to 7, characterized in that the base plate (1) is formed to be square with a supporting foot (7) at each of its corner points and with a preferably circular aperture in its centre, through which aperture the central supporting apparatus (32) is passed.

9. Robot according to one of Claims 1 to 8, characterized in that the gripping arm (80) is formed by a horizontal pivoting arm (10) which is arranged such that its height can be adjusted on a vertical column (8) with a gripper (101), which can be moved along the pivoting arm axis, for picking up and placing down a brick, and in that the vertical column (8) can pivot about its longitudinal axis at its lower end in the pivoting bearing (4) which is arranged on the horizontal traversing platform (2), and/or the pivoting bearing (4) can be pivoted with the horizontal traversing platform (2) about the column (8).

10. Robot according to Claim 9, characterized in that the gripper (101) is connected to one end of the horizontal pivoting arm (10), and in that the horizontal pivoting arm (10) can be moved horizontally with respect to the vertical column (8) along a guide rail (11).

11. Robot according to Claim 10, characterized in that a toothed rod (50) is arranged on the horizontal pivoting arm (10), extends beyond the longitudinal axis of said pivoting arm (10) and engages with a pinion (51) on a first gear motor, which is arranged on the vertical column (8).

12. Robot according to one of Claims 9 to 11, characterized in that the vertical column is formed from two parallel uprights (8), between which a carriage (12), which is fitted with the horizontal pivoting arm (10), is arranged such that its height can be adjusted.

13. Robot according to Claim 12, characterized in that a toothed rod (52) is arranged in the longitudinal direction on the vertical column (8), extends beyond the longitudinal axis of said vertical column (8) and engages with a pinion (53) on a second gear motor, which is arranged on the carriage (12).

14. Robot according to one of Claims 1 to 8, characterized in that the gripping arm (80) is formed from at least two arm elements (70, 71, 72) which are connected to one another and can pivot with respect to one another, in that the first end of the first arm element (70) is mounted such that it can pivot in a bearing (73) which is arranged on the plate (5), in that the other end of the first arm element (70) is mounted such that it can pivot on the first end of the second arm element (71), in that the second end of the second arm element (71) is mounted such that it can pivot on the first end of the third arm element (72), and in that the gripper (101) is arranged at the second end of the third arm element (72).

15. Robot according to one of the preceding claims, characterized in that the gripper (101) is formed from two gripping jaws (13) which are arranged parallel to one another and are fitted, such that they can move, on one jaw supporting plate (19), in such a manner that the parallel distance between them can be varied by moving them with respect to one another between an open position and a gripping position, in that the jaw supporting plate (19) is connected via a first contact-pressure coupling element (22) to an intermediate plate (20) which is arranged parallel to this jaw supporting plate (19) and can be moved in the direction at right-angles, in that the intermediate plate (20) is connected via a second contact-pressure coupling element (25) to a gripper base plate (23) which is arranged parallel and can be moved, and in that the gripper base plate (23) is mounted in the pivoting arm (10) and in the third arm element (72) such that it can pivot about its vertical axis.

16. Robot according to Claim 15, characterized in that the first contact-pressure coupling element (22) and the second contact-pressure coupling element (25) are formed from helical springs.

17. Robot according to one of the preceding claims, characterized in that a brick feed unit is provided, by means of which the bricks can be conveyed, with cement or mortar, for example: can be wetted on the bottom with a thin bed of mortar and can be moved to a pick-up position for the gripper (101).

18. Robot according to one of the preceding claims, characterized in that the brick feed unit comprises a stowage conveyor system (40) adjacent to which mortar application rollers (46), which project into a cement or mortar bath (41), are arranged and adjacent to which a conveyor unit is arranged, by means of which a wetted brick can be moved to the pick-up position for the gripper (101).

19. Method for automatically placing bricks on a vertical wall with the aid of a robot according to one of Claims 1 to 13 and 15 to 18, characterized in that the gripper (101) is moved to the pick-up position for the respective brick (200) to be positioned next, by pivoting of the vertical column (8) and/or by adjusting the height of the horizontal pivoting arm (10) and/or by horizontal movement of the gripper (101) along the pivoting arm axis, in that, subsequently, the gripping jaws (13) are moved to their gripping position, in that, after this, the gripper (101) is moved, by pivoting of the vertical column (8) and/or by adjusting the height of the horizontal pivoting arm (10) and/or by horizontal movement of the gripper (101) along the pivoting arm axis, to the position at which the brick (200) is intended to be positioned, in that, subsequently, the brick (200) is initially pressed in the horizontal direction against the previously positioned brick by movement of the traversing platform (2) and is then placed down and pressed on in the vertical direction by adjusting the height of the horizontal pivoting arm (10), in that the gripping jaws (13) are then moved to their open position again, in that, after each brick positioning operation, the entire robot is statically supported on the supporting feet (7), by extending the supporting feet (7) and thus relieving the load on the central supporting apparatus (32), after which the horizontal traversing platform (2) is moved through one step width, preferably one brick width, with respect to the base plate (1), in the direction of the next positioning point, the supporting feet (7) are then moved to their retracted position, the central supporting apparatus (32) statically supports the robot, the horizontal base plate (1) then follows up the movement of the horizontal traversing platform (2) and, finally, the supporting feet (7) are moved to their extended position again.

20. Method for automatically placing bricks on a vertical wall with the aid of a robot according to one of Claims 1 to 8 and 14 to 17, characterized in that the gripper (101) is moved to the pick-up position for the respective brick (200) to be positioned next, by pivoting of the plate (5) and/or by pivoting of the arm elements (70, 71, 72), in that the gripping jaws (13) are then moved to their gripping position, in that, after this, the gripper (101) is moved, by pivoting of the arm elements (70, 71, 72), to the position at which the brick (200) is intended to be positioned, in that, subsequently, the brick (200) is initially pressed in the horizontal direction against the previously positioned brick by movement of the traversing platform (2) and is then placed down and pressed on in the vertical direction by corresponding pivoting of the arm elements (70, 71, 72), in that, subsequently, the gripping jaws (13) are moved to their open position again, in that, after each brick positioning operation, the entire robot is statically supported on the supporting feet (7), by extending the supporting feet (7) and thus relieving the load on the central supporting apparatus (32), after which the horizontal traversing platform (2) is moved through one step width, preferably one brick width, with respect to the base plate (1), in the direction of the next positioning point, the supporting feet (7) are then moved to their retracted position, the central supporting apparatus (32) statically supports the robot, the horizontal base plate (1) then follows up the movement of the horizontal traversing platform (2) and, finally, the supporting feet (7) are moved to their extended position again.

21. Method for automatically placing bricks on a vertical wall which is not straight, for example is provided with corners, according to one of Claims 19 or 20, characterized in that, when it is supported by the central supporting apparatus (32), the horizontal traversing platform (2) is pivoted with respect to the plate (5), and thus with respect to the central supporting apparatus (32), through an angle which corresponds to the corner angle.

22. Method according to Claim 21 with an automatic brick feed device, characterized in that a brick (200), which is the next to be positioned is held by a stop (45) on the brick feed in the pick-up position for the gripper (101), in that, once the gripper (101) has taken this brick (200) from its position, the second brick stop device (44) in the brick feed direction releases the next brick (201), in that this brick (201) passes over the mortar application rollers (46) to the brick stop (45), in that the second brick stop device (44) is then moved to its blocking position again, and in that the first brick stop device (43) in the brick feed direction releases the next bricks (202) and (203), in that the first brick stop device (43) is moved to its blocking position when the brick (202) has reached the second brick stop device (44).

23. Method according to one of Claims 19 to 22, characterized in that the bricks are gripped at their ends by the gripping jaws (13), and in that the bricks are laid with their broad sides against one another.

## Revendications

1. Robot pour la pose de briques, pour une maçonnerie en construction, avec un bras de préhension (80), un dispositif d'appui (32) central, portant le bras de préhension, étant prévu, dispositif sur lequel l'ensemble du robot peut être soutenu de façon statique, caractérisé par le fait qu'un dispositif d'appui périphérique, équipé de pieds d'appui (7) réglables en hauteur entre une position rétractée et une position déployée, est prévu, position rétractée dans laquelle l'ensemble du robot avec le dispositif d'appui central (32) est soutenu statiquement sur une base et dans la position déployée duquel l'ensemble du robot avec les pieds d'appui (7) est soutenu statiquement sur la base, que le dispositif d'appui central (32) est constitué par un composant fixé au bras de préhension (80) de façon fixe, comprenant des parties exclusivement fixes les unes par rapport aux autres, et que le dispositif d'appui périphérique est mobile dans une direction parallèle au groupe de briques à placer, par rapport au dispositif d'appui central (32), ceci de la valeur d'un pas de déplacement prédéterminable.

2. Robot selon la revendication 1, caractérisé par le fait que le dispositif d'appui central (32) est constitué d'un cylindre creux qui est relié rigidement à une plaque de fond et est doté d'ailerons d'appui latéraux.

3. Robot selon la revendication 1 ou 2, caractérisé par le fait que les pieds d'appui (3) du dispositif d'appui périphérique sont disposés sur une plaque de base (1) horizontale et que le dispositif central (32) est disposé au moyen d'un palier de pivotement (4) et en s'étendant dans la plaque de base horizontale (1), le palier de pivotement (4) étant relié, d'une part, au dispositif d'appui central (32) et, d'autre part, à une plate-forme de déplacement horizontale (2), la plate-forme de déplacement (2) étant mobile par rapport à la plaque de base horizontale (1).

4. Robot selon la revendication 1, 2 ou 3, caractérisé par le fait que le palier de pivotement (4) est constitué par un roulement à billes dont la piste intérieure est rigidement reliée à un côté au dispositif d'appui central (32) et dont la piste extérieure est rigidement reliée à l'autre côté à la plate-forme de déplacement horizontal (2).

5. Robot selon la revendication 4, caractérisé par le fait que la piste de roulement intérieure du roulement à billes est reliée au dispositif d'appui (32) par une première plaque (5) et, le cas échéant, par une deuxième plaque (34).

6. Robot selon la revendication 4, caractérisé par le fait que, sur la piste de roulement extérieure du roulement à billes, est montée une denture (54) qui s'engage avec un pignon (55) d'un troisième motoréducteur disposé sur la plaque (5).

7. Robot selon l'une des revendications 1 à 6, caractérisé par le fait que la plate-forme de déplacement (2) est mobile par rapport à la plaque de base (1), le long de deux guidages (3), au moyen de deux entraînements de déplacement (6) constitués de préférence de pistons (62) et de cylindres (61), qui sont reliés rigidement par une de leurs extrémités à la plaque de base (1) et par leur autre extrémité à la plate-forme de déplacement horizontal (2).

8. Robot selon l'une des revendications 1 à 7, caractérisé par le fait que la plaque de base (1) est constituée sous une forme parallélépipédique avec chaque fois un pied d'appui (7) sur ses points d'angle et avec un passage de préférence de forme circulaire en son centre, passage que traverse le dispositif d'appui central (32).

9. Robot selon l'une des revendications 1 à 8, caractérisé par le fait que le bras de préhension (80) est constitué par un bras de pivotement horizontal (10) qui est disposé de façon réglable en hauteur avec un préhenseur (101) mobile le long de l'axe de bras de pivotement pour supporter et déposer une brique, sur une colonne verticale (8), et que la colonne verticale (8) est pivotante à son extrémité inférieure autour de son axe longitudinal dans le palier de pivotement (4) disposé sur la plate-forme de déplacement horizontal (2), respectivement le palier de pivotement (4) est susceptible de pivoter autour de la colonne (8) avec la plate-forme de déplacement horizontal (2).

10. Robot selon la revendication 9, caractérisé par le fait que le préhenseur (101) est relié à une extrémité du bras horizontal de pivotement (10) et que le bras de pivotement horizontal (10) est mobile horizontalement le long d'une glissière de guidage (11) par rapport à la colonne verticale.

11. Robot selon la revendication 10, caractérisé par le fait que sur le bras de pivotement horizontal 10) est disposée une crémaillère (50) s'étendant sur son axe longitudinal et s'engrenant avec un pignon (51), appartenant à un premier motoréducteur disposé sur la colonne verticale (8).

12. Robot selon l'une des revendications 9 à 11, caractérisé par le fait que la colonne verticale est constituée de deux montants parallèles (8) entre lesquels est disposé, de façon réglage en hauteur, un chariot (12) portant le bras pivotant horizontal (10).

13. Robot selon la revendication 12, caractérisé par le fait que sur la colonne verticale (8) est disposée, dans la direction longitudinale, une crémaillère (52) s'étendant sur son axe longitudinal et s'engrenant avec un pignon (53) appartenant à un deuxième motoréducteur disposé sur le chariot (12).

14. Robot selon l'une des revendications 1 à 8, caractérisé par le fait que le bras de préhension (80) est constitué d'au moins deux éléments de bras (70, 71, 72) pouvant pivoter l'un par rapport à l'autre, reliés ensemble, que la première extrémité du premier élément de bras (70) est montée de façon à pouvoir pivoter dans un palier (73) disposé sur la plaque (5), que l'autre extrémité du premier élément de bras (70) est montée de façon à pouvoir pivoter sur la première extrémité du deuxième élément de bras (71), que la deuxième extrémité du deuxième bras (71) est montée de façon à pouvoir pivoter sur la première extrémité du troisième élément de bras (72), et que, sur la deuxième extrémité du troisième élément de bras (72), est disposé le préhenseur (101).

15. Robot selon l'une des revendications précédentes, caractérisé par le fait que le préhenseur (101) est constitué de deux mâchoires de saisie (13), disposées parallèlement l'une à l'autre, qui sont montées de façon à pouvoir se déplacer sur une plaque de support de mâchoire (19), de manière que leur espacement parallèle l'une par rapport à l'autre soit modifiable par un déplacement mutuel entre une position ouverte et une position de saisie, et que la plaque de support de mâchoire (19) est reliée, par un premier organe d'accouplement à pression de pressage (22), à une plaque intermédiaire (20), disposée parallèlement à celui-ci et déplaçable dans une direction perpendiculaire par rapport à celui-ci, que la plaque intermédiaire (20) est reliée, par un deuxième organe d'accouplement à pression de pressage (25), à une plaque de base de préhenseur (23), disposée parallèlement et déplaçable, et que la plaque de base de préhenseur (23) est montée de façon à pouvoir pivoter autour de son axe vertical, dans le bras pivotant (10), respectivement dans le troisième élément de bras (72).

16. Robot selon la revendication 15, caractérisé par le fait que les premier et deuxième organes d'accouplement à pression de pressage (22, 25) sont constitués d'un ressort hélicoïdal.

17. Robot selon l'une des revendications précédentes, caractérisé par le fait qu'une unité d'alimentation en briques est prévue à l'aide de laquelle les briques sont susceptibles de se déplacer, enduites d'un adhésif ou d'un mortier, par exemple d'un mortier à lit fin placé sur le côté de la pose et déplacées dans une position de prélèvement destinée au préhenseur (101).

18. Robot selon l'une des revendications précédentes, caractérisé par le fait que l'unité d'alimentation en briques comprend un système transporteur à accumulation (40), auquel sont associés des rouleaux applicateurs de mortier (46) s'y raccordant, qui pénètrent dans un bain d'adhésif ou de mortier (14), et, ensuite, est disposée une unité de transport au moyen de laquelle une brique ayant été enduite peut être déplacer jusqu'à la position de prélèvement du préhenseur (101).

19. Procédé de pose automatique d'une maçonnerie en construction à l'aide d'un robot selon l'une des revendications 1 à 13 et 15 à 18, caractérisé par le fait que le préhenseur (101), par pivotement de la colonne verticale (8) et/ou par un réglage en hauteur du bras pivotant horizontal (10) et/ou par un déplacement horizontal du préhenseur (101) le long de l'axe du bras de pivotement, est placé dans la position de prélèvement pour chaque fois la brique suivante (200) à placer, qu'ensuite les mâchoires de saisie (13) sont déplacées dans leur position de saisie, qu'ensuite le préhenseur (101), par un pivotement de la colonne verticale (8) et/ou par un réglage en hauteur du bras pivotant horizontal (10) et/ou par un déplacement horizontal du préhenseur (101), est déplacé le long de l'axe du bras de pivotement à la position à laquelle la brique (200) doit être placée, qu'ensuite la brique (200) est pressée d'abord en direction horizontale sur la brique placée précédemment par un déplacement de la plate-forme de déplacement (2), puis déposée en direction verticale par réglage en hauteur du bras pivotant horizontal (10) et pressée, qu'ensuite les mâchoires de saisie (13) sont de nouveau placées à leur position ouverte, qu'après chaque processus de pose de brique, l'ensemble du robot est soutenu statiquement sous décharge du dispositif d'appui central (32), par déploiement des pieds d'appui (7) sur celui-ci, ensuite la plate-forme déplaçable horizontale (2) est déplacée par rapport à la plaque de base (1), de la valeur d'un pas de déplacement, de préférence de la largeur d'une brique en direction de la position de pose subséquente, les pieds d'appui (7) étant ensuite déplacés à leur position rétractée, le dispositif d'appui central (32) soutenant statiquement le robot, puis la plaque de base horizontale (1) étant amenée par la plate-forme déplaçable horizontale (2) et, enfin, les pieds d'appui (7) sont déplacés à leur position déployée.

20. Procédé de pose automatique d'une maçonnerie en construction à l'aide d'un robot selon l'une des revendications 1 à 8 et 14 à 17, caractérisé par le fait que le préhenseur (101), par un pivotement de la plaque (5) et/ou par un pivotement des éléments de bras (70, 71, 72), est placé dans la position de prélèvement de la brique suivante (200) à placer, qu'ensuite les mâchoires de saisie (13) sont déplacées à leur position de saisie, qu'ensuite le préhenseur (101), par un pivotement des éléments de bras (70, 71, 72), est déplacé à la position à laquelle la brique (200) doit être placée, qu'ensuite la brique (200) est pressée d'abord en direction horizontale sur la brique posée précédemment par un déplacement de la plate-forme de déplacement (2), puis est déposée et pressée en direction verticale par un pivotement correspondant des éléments de bras (70, 71, 72), qu'ensuite les mâchoires de saisie (13) sont replacées à leur position ouverte, qu'après chaque processus de pose de brique la totalité du robot est soutenue statiquement avec décharge du dispositif d'appui central (32), par déploiement des pieds d'appui (7) sur celui-ci, ensuite la plate-forme de déplacement horizontale (2) est déplacée par rapport à la plaque de base (1), de la valeur d'un pas de déplacement, de préférence d'une largeur de brique, en direction de la position de pose suivante, en ce que les pieds d'appui (7) sont ensuite déplacés à leur position rétractée, le dispositif d'appui central (32) soutenant statiquement le robot, puis la plaque de base horizontale (1) est ramenée par rapport à la plate-forme de déplacement horizontale (2) et, ensuite, les pieds d'appui (7) sont redéplacés à leur position déployée.

21. Procédé de pose automatique d'une maçonnerie en construction, n'ayant pas une forme rectiligne, c'est-à-dire dotée d'angles, selon l'une des revendications 19 et 20, caractérisé par le fait que, lors de l'appui au moyen du dispositif d'appui horizontal (32), la plate-forme de déplacement horizontale (2) pivote par rapport à la plaque (5) et, ainsi, par rapport au dispositif d'appui central (32), ceci d'un angle qui correspond à l'angle de la maçonnerie.

22. Procédé selon la revendication 21, avec un dispositif d'alimentation en briques automatique, caractérisé par le fait qu'une brique (200) devant être posée comme la suivante est maintenue, au moyen d'une butée (45) de l'alimentation en briques, dans la position de prélèvement du préhenseur (101), après que le préhenseur (101) a prélevé celle-ci de sa position, qui, dans la direction d'alimentation en briques le deuxième dispositif d'arrêt de brique (44), libère la brique (201) suivante, que celle-ci arrive sur les rouleaux d'application de mortier (46) jusqu'à la butée de brique (45), qu'ensuite le deuxième dispositif d'arrêt de brique (44) est replacé à sa position bloquante, et que le premier dispositif d'arrêt de brique (43), dans la direction d'amenée en briques, libère les briques (202) et (203) suivantes, que, lorsque la brique (202) est arrivée au deuxième dispositif d'arrêt de brique (44), le premier dispositif d'arrêt de brique (41) est placé à sa position bloquante.

23. Procédé selon l'une des revendications 19 à 22, caractérisé par le fait que les briques sont saisies sur leur face frontale par les mâchoires de serrage (13) et les briques sont posées avec leur face large en appui les unes sur les autres.
